# EUROPÄISCHE PATENTSCHRIFT

(11) **EP 1 667 863 B1**
(45) Veröffentlichungstag und Bekanntmachung des Hinweises auf die Patenterteilung: **21.12.2011**
(21) Anmeldenummer: 04765192.2
(22) Anmeldetag: 15.09.2004
(51) Int. Cl.: B60J 3/02, B29C 63/04

(54) **KASCHIERVERFAHREN UND KASCHIERVORRICHTUNG**
COVERING METHOD AND COVERING DEVICE
PROCEDE ET DISPOSITIF DE RECOUVREMENT

(30) Priorität: 30.09.2003 DE 10345812
(43) Veröffentlichungstag der Anmeldung: 14.06.2006
(73) Patentinhaber: Greidenweis, Michael, 78549 Spaichingen (DE)
(72) Erfinder: Greidenweis, Michael, 78549 Spaichingen (DE)
(74) Vertreter: Sawodny, Michael-Wolfgang
(86) Internationale Anmeldenummer: PCT/EP2004/010278
(87) Internationale Veröffentlichungsnummer: WO 2005/037586

(56) Entgegenhaltungen:
- EP-A- 0 603 498
- DE-A- 10 201 389
- US-A- 5 609 709
- PATENT ABSTRACTS OF JAPAN Bd. 0140, Nr. 46 (M-0926), 26. Januar 1990 (1990-01-26) & JP 1 275124 A (ISHIKAWAJIMA HARIMA HEAVY IND CO LTD), 2. November 1989 (1989-11-02)
- PATENT ABSTRACTS OF JAPAN Bd. 0102, Nr. 95 (M-523), 7. Oktober 1986 (1986-10-07) -& JP 61 110533 A (KASAI KOGYO CO LTD), 28. Mai 1986 (1986-05-28)

## Beschreibung

Die vorliegende Erfindung betrifft ein Kaschierverfahren und eine Kaschiervorrichtung. Das Kaschierverfahren und die Kaschiervorrichtung eignen sich insbesondere zum Kaschieren von Fahrzeugsonnenblenden beziehungsweise Halbteilen von Fahrzeugsonnenbfenden.

Kaschier- oder Umhüllverfahren von Teilen oder Halbteilen, beispielsweise von Sonnenblenden von Kraftfahrzeugen, sind bekannt. Beispielsweise wird auf die EP 0 456 573 B1 verwiesen, welche ein Verfahren zur Herstellung einer Sonnenblende für ein Kraftfahrzeug zeigt, bei dem ein Kern in eine Stofftasche, welche an einem Ende geöffnet ist, geschoben wird und die Ränder des elastischen Stoffes der Stofftasche derart in eine Nut in dem Kern auf der Seite der offenen Seite der Stofftasche gesteckt werden, dass auch diese Seite der Stofftasche verschlossen wird.

Die europäische Patentschrift EP 0 692 398 B1 beschreibt eine Sonnenblende für Fahrzeuge, welche aus zwei plattenförmigen Halbzeugen aus einem mehrschichtigen Material hergestellt wird, die auf ihrer jeweiligen Außenseite flächig mit einer Dekorschicht kaschiert und an ihren dekorfreien Rückseiten verbunden sind. Durch die Sandwich-Bauweise des Kernmaterials wird die notwendige mechanische Steifigkeit der Sonnen blende erreicht. An den Kanten der Formlinge des mehrschichtigen Materials ist entweder nur die Dekorschicht umgebugt oder die Dekorschicht zusammen mit der umlaufenden Außenkante des jeweiligen Formlings umgebugt. Zur Herstellung der Sonnenblende muss zunächst das plattenförmige Halbzeug aus mehrschichtigen Material zu Formlingen umgeformt werden, anschließend die Außenseiten kaschiert werden, anschließend das Halbzeug und die Dekorschicht in einem Arbeitsgang ausgeschnitten oder ausgestanzt werden, und anschließend wird ein vorgegebener Überstand umgebugt.

Aufgrund der vielen hintereinander geschalteten Arbeitsschritte in verschiedenen Bearbeitungsvorrichtungen oder gegebenenfalls durch das Ausführen einiger Arbeitsschritte von Hand sind die beschriebenen Herstellungsverfahren zeit- und kostenintensiv.

Weitere Kaschierverfahren und - Vorrichtungen werden durch die JP 59-201814 und JP 01-275124 beschreiben.

Der Erfindung liegt die Aufgabe zugrunde, ein Kaschierverfahren und eine Kaschiervorrichtung darzustellen, mit welcher Teile oder Halbteile, insbesondere die Halbteile von Fahrzeugsonnenblenden, hochwertig und zugleich kostengünstig kaschiert werden können.

Die Aufgabe der Erfindung wird durch ein Kaschierverfahren mit den Schritten des Anspruchs 1 und eine Kaschiervorrichtung mit den Merkmalen des Anspruchs 14 gelöst. Die abhängigen Ansprüche beschreiben besonders vorteilhafte Weiterbildungen der Erfindung.

Die erfindungsgemäße Kaschiervorrichtung zur Ausführung des erfindungsgemäßen Kaschierverfahrens gemäß Anspruch 1 umfasst dementsprechend eine Grundkörperhalteeinrichtung zum Halten des zu kaschierenden Grundkörpers und eine Kaschierstoffauflageeinrichtung zum Auflegen des Kaschierstoffes auf den Grundkörper. Die Grundkörperhalteeinrichtung ist insbesondere in Form eines Presswerkzeuges ausgebildet, so dass mittels eines zusätzlich vorgesehenen Werkzeugoberteils der auf dem Grundkörper aufgelegte Kaschierstoff mit dem Grundkörper verpresst werden kann.

Die erfindungsgemäße Vorrichtung umfasst ferner eine Kaschierstoffschneideinrichtung zum Schneiden des Kaschierstoffes. Dabei weist die Kaschierstoffschneideinrichtung ein über den gesamten Schneidbereich verlaufendes Schnittmesser auf. Der Schneidbereich erstreckt sich entlang des Außenumfangs des Grundkörpers in einem vorgegebenen Abstand zum Grundkörper, so dass beim bzw. nach dem Schneiden ein Teil des Kaschierstoffes um ein vorgegebenes Ausmaß über den Grundkörper hervorsteht, bzw. aufgrund der Werkzeuggeometrie herunterhängt.

Um diesen überstehenden Teil des Kaschierstoffes um den Rand des Grundkörpers umzubugen, umfasst die erfindungsgemäße Vorrichtung ferner eine Umbugeinrichtung.

Zugleich sind Mittel zum Verkleben des Kaschierstoffes und des Umbugs jeweils am Grundkörper vorgesehen. Diese Mittel können beispielsweise Heizmittel sein, welche einen Klebstoff aktivieren. Die Aktivierung durch Beheizung kann dabei direkt oder vorteilhaft indirekt erfolgen. Indirekt bedeutet in diesem Zusammenhang, dass der Grundkörper und/oder der Kaschierstoff durch das Heizmittel aufgeheizt wird und die vom Grundkörper und/oder Kaschierstoff aufgenommene Wärme zur Aktivierung des Klebstoffes verwendet wird.

Der Klebstoff kann beispielsweise in Form einer Beschichtung auf dem Kaschierstoff aufgebracht sein. Insbesondere ist der Kaschierstoff mit einer Polyurethanbeschichtung versehen. Selbstverständlich ist es zusätzlich oder alternativ möglich, auch den Grundkörper mit einer entsprechenden Klebstoffbeschichtung, beispielsweise einer Polyurethanbeschichtung, zu versehen.

Die Schneideinrichtung umfasst ein Heißschnittmesser, welches elektrisch widerstandsbeheizt ist. Dieses Heißschnittmesser kann beispielsweise auf eine Temperatur von mehr als 500° Celsius, insbesondere auf 550° Celsius, aufgeheizt werden. Wie nachfolgend noch anhand der Figurenbeschreibung dargestellt werden wird, weist ein solches elektrisch widerstandsbeheiztes Heißschnittmesser durch eine filigrane Ausbildungsform einer schmalen Klinge eine vergleichsweise geringe Wärmekapazität auf, was zu einer Energieeinsparung beim Aufheizen führt, und ermöglicht das Schneiden des Kaschierstoffes in einem schmalen Spalt zwischen beispielsweise den Pressenteilen der Grundkörperhalteeinrichtung und dem Rahmenteil der Kaschierstoffauflageeinrichtung.

Die Kaschierstoffauflageeinrichtung ist vorzugsweise in Form eines Spannrahmensystems ausgebildet. Ein solches Spannrahmensystem nimmt einen Kaschierstoffzuschnitt, welcher zuvor insbesondere aus einer Rollware insbesondere mittels einer Querschneideeinheit zugeschnitten wurde, in einem Spannrahmen auf und spannt diesen Kaschierstoffzuschnitt in seiner Flächenebene. Anschließend wird vorteilhaft der Kaschierstoffzuschnitt auf einen Grundkörper aufgelegt beziehungsweise über die Oberseite des Grundkörpers in einem gedehnten Zustand übergestülpt. Nachdem anschließend durch Herunterfahren des Werkzeugoberteils der Kaschierstoffzuschnitt mit dem Grundkörper verpresst wird, kann der überstehende Teil des Kaschierstoffzuschnitts in der schmalen Lücke zwischen dem Außenumfang des Werkzeugoberteils und dem Innenumfang des Spannrahmens durch das beschriebene Heißschnittmesser geschnitten werden. Weitere Einzelheiten sind aus der Figurenbeschreibung ersichtlich.

Die Vorspannung im Kaschierstoff kann zusätzlich oder alternativ auch beim Überstülpen des Kaschierstoffes über den Grundkörper erzeugt werden.

Um eine bessere Verklebung zu erzielen, kann der Grundkörper oder können die Grundkörper vor dem Auflegen des Kaschierstoffes beziehungsweise vor ihrem Einlegen in die Grundkörperhalteeinrichtung einer Oberflächenbehandlung unterzogen werden, um ihre Oberflächenspannung zu erhöhen. Diese Oberflächenbehandlung wird insbesondere im Durchlaufverfahren beidseitig für die Grundkörper durchgeführt. Diese Oberflächenbehandlung eignet sich insbesondere für Grundkörper, welche aus EPP hergestellt sind. Als Oberflächenbehandlung eignet sich beispielsweise eine Coronabehandlung.

Das Umbugen des nach dem Schneiden überstehenden Teils des Kaschierstoffes erfolgt vorteilhaft mittels Umbugschiebern, welche von außen in Richtung des herunterhängenden Teils des Kaschierstoffs heranfahren, diesen Teil nach innen in Richtung des Grundkörpers mitnehmen und flächig gegen den Grundkörper pressen. Eine besonders gute flächige Verpressung wird erreicht, wenn die Umbugschieber nach dem Erfassen des herunterhängenden Teils des Kaschierstoffes nicht nur nach innen verfahren werden, sondern sich zugleich auch senkrecht zu dieser Richtung gegen die flächige Seite des Grundkörpers nach oben bewegen.

Durch das erfindungsgemäße Kaschierverfahren beziehungsweise die erfindungsgemäße Kaschiervorrichtung ist es möglich, eine Vielzahl von bisher nacheinander in verschiedenen Vorrichtungen ausgeführten Arbeitsschritten in einem einzigen Arbeitsgang einer einzigen Vorrichtung beziehungsweise eines einzigen Werkzeugs zu kombinieren. Ferner ist die notwendige Energie zum Ausführen des erfindungsgemäßen Verfahrens beziehungsweise zum Betreiben der erfindungsgemäßen Vorrichtung im Vergleich zum Stand der Technik äußerst gering. Zudem können beispielsweise Sonnenblenden für Fahrzeuge erzeugt werden, welche mit nahezu beliebigen Stoffen kaschiert werden können und sowohl optisch auch haptisch einen hochwertigen Eindruck hervorrufen.

Dadurch, dass eine große Freiheit bei der Auswahl des Werkstoffs des Grundkörpers und des Kaschierstoffes besteht, können die Anforderungen internationaler Normen für Sonnenblenden leicht erfüllt werden.

Nachfolgend soll die Erfindung anhand eines Ausführungsbeispieles mit Bezug auf die Herstellung von Fahrzeugsonnenblenden beschrieben werden. Die Erfindung ist jedoch nicht auf die Herstellung von Fahrzeugsonnenblenden beschränkt, sondern das erfindungsgemäße Verfahren beziehungsweise die erfindungsgemäße Vorrichtung können zur Kaschierung von vielen anderen Teilen oder Halbteilen insbesondere im Fahrzeugbau verwendet werden.

Ferner ist die Erfindung nicht darauf beschränkt, einen Grundkörper unmittelbar mit einem Kaschierstoff zu umhüllen, sondern es können auch beliebig Zwischenschichten zwischen Grundkörper und Kaschierstoff angeordnet werden, beispielsweise eine Schaumstoffschicht, um die Haptik des kaschierten Körpers gezielt einzustellen. Durch Vorsehen einer solchen Schaumstoffschicht auf einem vergleichsweise harten Grundkörper kann beispielsweise erreicht werden, dass sich der kaschierte Körper weich beziehungsweise an seiner Oberfläche elastisch nachgiebig anfühlt.

Es zeigen:
- Figur 1: den Schnittbereich einer erfindungsgemäßen Kaschiervorrichtung in einer schematischen Darstellung vor dem Schneiden des Kaschierstoffes;
- Figur 2: den Schnittbereich nach dem Schneiden des Kaschierstoffes;
- Figur 3: einen Querschnitt durch eine Sonnenblende, bestehend aus zwei Halbteilen, welche durch das erfindungsgemäße Verfahren kaschiert wurden;
- Figur 4: schematisch die Vorbehandlung und Zufuhr von Kaschierstoff vor dem Auflegen auf einen Grundkörper;
- Figur 5: einen Drehtisch eines Ausführungsbeispiels einer erfindungsgemäßen Kaschiervorrichtung;
- Figur 6: die Kaschiervorrichtung mit einem Drehtisch aus der Figur 5 in einer seitlichen schematischen Ansicht.

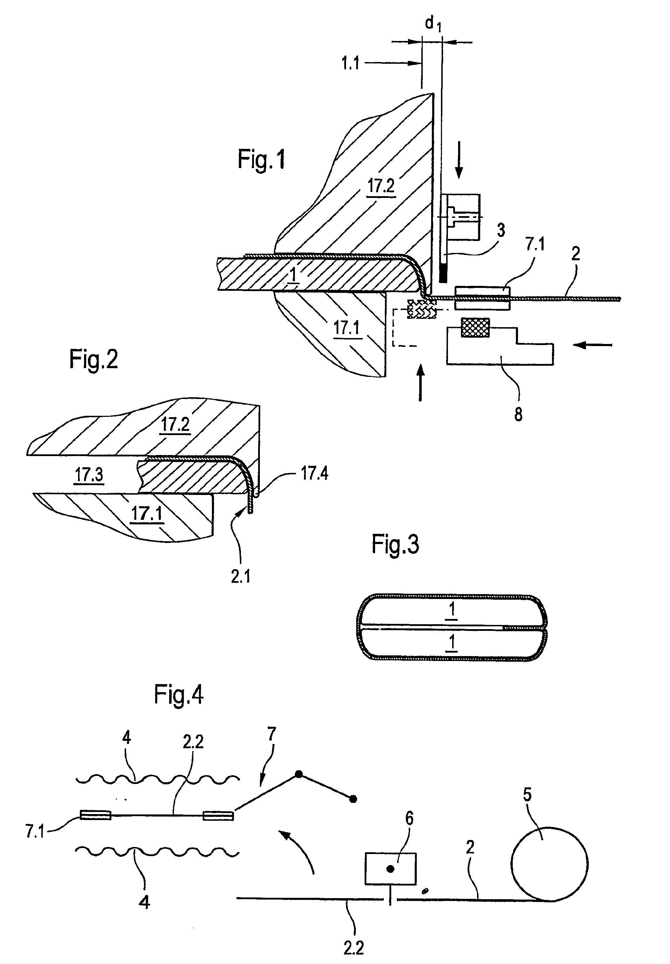

In der Figur 1 erkennt man einen Zustand des erfindungsgemäßen Verfahrens, in welchem der Kaschierstoff 2, welcher gespannt in einem Spannrahmen 7.1 gehalten wird, auf einen Grundkörper 1 aufgelegt ist und durch ein Werkzeugunterteil 17.1 und ein Werkzeugoberteil 17.2 mit dem Grundkörper 1 verpresst ist. Alternativ wird der Kaschierstoff 2 ohne Vorspannung im Spannrahmen 7.1 gehalten und beim Überstülpen über die Oberseite des Grundkörpers gespannt. Das Werkzeug kann insbesondere eine Presse sein, das Werkzeugoberteil ist dann im speziellen ein Pressenoberteil, das Werkzeugunterteil ein Pressenunterteil.

Nach dem gezeigten Zustand wird der Kaschierstoff 2 durch das Schnittmesser 3 geschnitten, indem das Schnittmesser 3, welches ein elektrisch widerstandsbeheiztes Heißschnittmesser ist, senkrecht nach unten in die Lücke zwischen dem Außenumfang des Werkzeugoberteils 17.2 und dem Innenumfang des Spannrahmens 7.1 vertikal abgesenkt wird und so den Kaschierstoff 2 durchschneidet. Der Umbugschieber 8 ist zu dieser Zeit noch inaktiv.

Anschließend stellt sich die in der Figur 2 gezeigte Konfiguration ein. Wie man sieht, ist der Kaschierstoff 2 geschnitten, wird sich aufgrund seiner zuvor durch den Rahmen aufgebrachten Spannung etwas in seiner flächigen Ebene zurückziehen und mit einem über den Außenumfang 1.1 des Grundkörpers 1 überstehenden Teil 2.1 aufgrund der Werkzeuggeometrie im wesentlichen senkrecht nach unten herunterhängen.

Jetzt wird der Umbugschieber 8 betätigt, wie durch die Pfeile in der Figur 1 angedeutet ist. Zunächst fährt der Umbugschieber 8 in einer waagerechten Ebene von außen in Richtung des überstehenden (herunterhängenden) Teils 2.1 des Kaschierstoffes und schiebt diesen Teil 2.1 im Hinblick auf den Außenumfang 1.1 des Grundkörpers 1 nach innen. Anschließend oder gleichzeitig bewegt sich der Umbugschieber 8 nach oben, um den überstehenden Teil 2.1 des Kaschierstoffes 2 flächig gegen die Unterseite des Grundkörpers 1 zu pressen. Aufgrund der Restwärme des Kaschierstoffes 2 und des Grundkörpers 1, welche beide vor Einbringen in die gezeigte verpresste Position vorgeheizt wurden, wird der überstehende Teil 2.1 des Kaschierstoffes mit dem Grundkörper mittels einer Klebeschicht, insbesondere Polyurethanschicht, mit welcher der Kaschierstoff 2 auf seiner Unterseite beschichtet ist, durch Aktivierung des Klebstoffes verklebt.

Selbstverständlich ist es auch denkbar, die Anordnung von Kaschierstoff und Grundkörper andersherum vorzunehmen, das heißt, der Grundkörper könnte auf dem Kaschierstoff liegen. Dann müssten jedoch zusätzliche Maßnahmen getroffen werden, um den überstehenden Teil 2.1 des Kaschierstoffes nach dem Schneiden umzubugen, da die vorteilhafte Konfiguration, dass der Teil 2.1 zusätzlich durch seine Gewichtskraft senkrecht nach unten hängt, nicht auftreten würde.

Das gezeigte Werkzeugoberteil 17.1 weist an seinem äußeren Umfang eine Nase 17.4 auf, welche über den Querschnitt des gepressten Grundkörpers 1 in senkrechter Richtung hervorsteht. Dadurch wird vorteilhaft erreicht, dass sich der äußere Umfang des Grundkörpers 1 beim Verpressen nicht radial nach außen verdrückt, was zu einer Faltenbildung im Kaschierstoff beziehungsweise zu einem nicht satten Anliegen des Kaschierstoffes am Grundkörper führen könnte. Ferner ist es durch den Vorsprung 17.4 leicht möglich, die gewünschte Überstandslänge des überstehenden Teils 2.1 einzustellen und eine geeignete Vorspannung im Bereich des Kaschierstoffes 2 zwischen Außenumfang des Werkzeugoberteils 17.2 und Innenumfang des Rahmenteils 7.1 einzustellen.

Wie man in der Figur 1 sieht, ist das Schnittmesser 3 filigran ausgebildet, das heißt mit einer geringen Dicke entlang des Umfangs in radialer Richtung. Dadurch ist es möglich, den Abstand zwischen Spannrahmen 7.1 und den Werkzeugteilen 17.1, 17.2 sehr klein auszubilden, was zu wenig Verschnitt beim Kaschierstoff 2 führt. Ferner ist die Wärmekapazität des Schnittmessers 3, trotz dass es über den gesamten Umfang des Werkzeugoberteils 17.2 beziehungsweise des Grundkörpers 1 umläuft, klein, was bei einer elektrischen Widerstandsbeheizung zu einem geringen Stromverbrauch führt.

In der Figur 3 ist ein Querschnitt durch eine fertige Sonnenblende dargestellt, welche aus zwei kaschierten Halbteilen besteht. Jedes Halbteil stellt einen Grundkörper 1 im Sinne der Erfindung dar, welcher durch das erfindungsgemäße Verfahren kaschiert wurde. Durch die erfindungsgemäße Kaschierung sind die beiden Formteile klappbar wie ein Buch zueinander angeordnet. Dementsprechend werden sie nach ihrer Kaschierung auf den Rückseiten mit einem Klebstoff versehen und zusammengeklappt.

In der Figur 4 erkennt man die Vorbehandlung des Kaschierstoffes 2. Dieser wird als Rollware 5 zur Verfügung gestellt und mittels einer Querschneideeinheit 6, das heißt einer Schneideeinheit, welche ein Messer aufweist, das sich senkrecht zur Bewegungsrichtung des Kaschierstoffes 2 in der Flächenebene des Kaschierstoffes 2 bewegt und dadurch den Kaschierstoff 2 in Kaschierstoffzuschnitte 2.2 zerschneidet, zerschnitten. Die Kaschierstoffzuschnitte 2.2 werden in ein Spannrahmensystem, umfassend einen Spannrahmen 7.1, eingelegt und verspannt. Das Spannrahmensystem 7 bewegt die Kaschierstoffzuschnitte 2.2 in eine Heizeinrichtung, beispielsweise umfassend zwei oder mehrere Infrarot-Heizfelder 4, welche den Kaschierstoffzuschnitt 2.2 von beiden Seiten vorwärmen.

Anschließend werden die vorgewärmten Kaschierstoffzuschnitte 2.2 auf einen oder mehrere Grundkörper 1 aufgelegt und mit diesen verbunden.

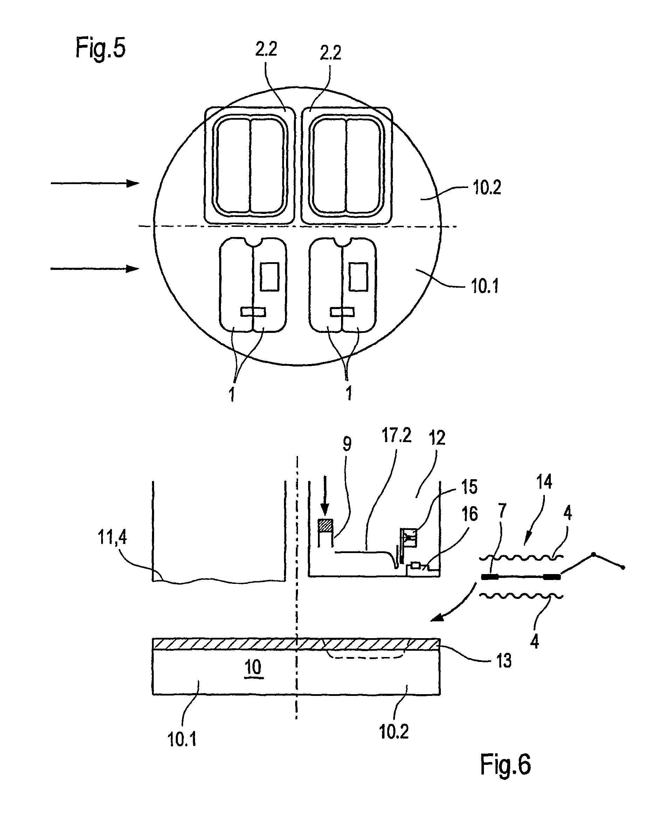

In der Figur 5 ist eine Draufsicht auf einen Drehtisch 10 einer erfindungsgemäßen Kaschiervorrichtung gezeigt. Wie man sieht, sind gleichzeitig vier Grundkörperpaare auf dem Drehtisch 10 angeordnet, wobei sich zwei in einem ersten Teil 10.1 des Drehtisches befinden und zwei in einem zweiten Teil 10.2 des Drehtisches. Wie in Verbindung mit der Figur 6 erkennbar ist, befindet sich ein Teil des Drehtisches 10 - in dem gezeigten Zustand der erste Teil 10.1 - im Bereich einer Heizeinrichtung 11, welche wiederum beispielsweise mit Infrarot-Feldern 4 bestückt sein kann. Der andere Teil des Drehtisches 10 - in dem gezeigten Zustand der zweite Teil 10.2 - befindet sich im Bereich einer Kaschiereinrichtung 12, welche eine Grundkörperhalteeinrichtung 13, eine Kaschierstoffauflageeinrichtung 14, eine Kaschierstoffschneideinrichtung 15 und eine Umbugeinrichtung 16 umfasst.

Die Grundkörper 1 werden im ersten Teil 10.1 des Drehtisches 10 aufbeziehungsweise eingelegt und zunächst vorteilhaft vorgewärmt. Die Vorwärmung kann selbstverständlich auch bereits zuvor erfolgt sein. Anschließend wird der Drehtisch 10 gedreht, so dass aus dem ersten Teil 10.1 der zweite Teil 10.2 wird und aus dem zweiten Teil 10.2 der erste Teil 10.1. Im zweiten Teil 10.2 wird mittels eines Spannrahmensystems 7 ein Kaschierstoffzuschnitt 2.2 in einem Spannrahmen 7.1 auf ein Grundkörperpaar aufgelegt und wie zuvor beschrieben geschnitten und mit diesem verbunden.

Anschließend oder gleichzeitig können mittels eines Stanzmessers 9, welches in der Kaschiereinrichtung 12 vorgesehen ist, Durchbrüche im Kaschierstoff 2 im Bereich von Aussparungen in den Grundkörpern 1 ausgestanzt werden. Hier können beispielsweise Spiegel oder andere Einsatzteile eingesetzt werden.

Anschließend werden, wie dargestellt, die kaschierten Grundkörper 1 wieder entnommen und beispielsweise mittels eines Kleberoboters auf der Unterseite (der nicht kaschierten Seite) mit Klebstoff versehen und zusammengeklappt. Auch hier kann wiederum Polyurethan als Klebstoff verwendet werden, welcher wärmeaktiviert wird.

Durch das erfindungsgemäße Kaschierverfahren können hochwertige Fahrzeugsonnenblenden verarbeitet werden, welche verschiedene Einbauten, wie beispielsweise mehrteilige Spiegel, Garagentoröffner, Mikrofone und so weiter in verschiedensten Varianten ermöglichen.

### Bezugszeichenliste

- 1: Grundkörper
- 1.1: Außenumfang
- 1.2: Durchbrüche
- 2: Kaschierstoff
- 2.1: überstehender Teil
- 2.2: Kaschierstoffzuschnitt
- 3: Schnittmesser
- 4: Infrarot-Heizfeld
- 5: Rollware
- 6: Querschneideeinheit
- 7: Spannrahmensystem
- 7.1: Spannrahmen
- 8: Umbugschieber
- 9: Stanzmesser
- 10: Drehtisch
- 10.1: erster Teil des Drehtisches
- 10.2: zweiter Teil des Drehtisches
- 11: Heizeinrichtung
- 12: Kaschiereinrichtung
- 13: Grundkörperhalteeinrichtung
- 14: Kaschierstoffauflageeinrichtung
- 15: Kaschierstoffschneideinrichtung
- 16: Umbugeinrichtung
- 17.1: Werkzeugunterteil, insbesondere Pressenunterteil
- 17.2: Werkzeugoberteil, insbesondere Pressenoberteil
- 17.3: Formenhohlraum
- 17.4: Vorsprung

## Patentansprüche

1. Kaschierverfahren, insbesondere zum Kaschieren von Fahrzeugsonnenblenden-Halbteilen, mit den folgenden Schritten:
- auf einen zu kaschierenden Grundkörper (1) wird ein Kaschierstoff (2) flächig aufgelegt und durch ein Werkzeugunterteil 17.1 und ein Werkzeugoberteil (17.2) mit dem Grundkörper verpresst;
- der über den Außenumfang (1.1) des Grundkörpers (1) überstehende Teil (2.1) des Kaschierstoffes (2) wird über den Außenumfang (1.1) des Grundkörpers (1) umgebugt und verklebt;
- eines der Werkzeugteile (17.1, 17.2) weist an seinem äußeren Umfang einen Vorsprung (17.4) auf, welcher über den Querschnitt des gepressten Grundkörpers (1) in senkrechter Richtung hevorszeht, so dass beim Verpressen der äußere Umfang des Grundkörpers nicht radial nach außen verdrückt wird;
**dadurch gekennzeichnet, dass**
der Kaschierstoff nach dem Auflegen durch ein entlang des gesamten Umfangs (1.1) des Grundkörpers (1) verlaufendes, mit einem vorgegebenen Abstand (D₁) zum Außenumfang des Grundkörpers außerhalb des Grundkörpers angeordnetes Schnittmesser (3) abgeschnitten wird und das Schnittmesser ein elektrisch widerstandsbeheiztes Heißschnittmesser ist und alle genannten Schritte durch eine einzige Kaschiervorrichtung ausgeführt werden.

2. Kaschierverfahren gemäß Anspruch 1, **dadurch gekennzeichnet, dass** der Kaschierstoff (2) nach dem Anlegen auf dem Grundkörper (1) mit dem Grundkörper (1) verpresstwird.

3. Kaschierverfahren gemäß einem der Ansprüche 1 oder 2, **dadurch gekennzeichnet, dass** das Heißschnittmesser auf eine Temperatur von mehr als 500° C aufgeheizt wird.

4. Kaschierverfahren gemäß einem der Ansprüche 1 bis 3, **dadurch gekennzeichnet, dass** der Grundkörper (1) und der Kaschierstoff (2) insbesondere zeitgleich vor dem Zusammenführen vorgewärmt werden

5. Kaschierverfahren gemäß einem der Ansprüche 2 bis 4, **dadurch gekennzeichnet, dass** der Kaschierstoff (2) mit einem Klebstoff, insbesondere einem Polyurethanheißkleber, beschichtet ist und durch das Verpressen mit dem Grundkörper (1) zugleich, insbesondere durch Aktivierung des Klebstoffes durch die Wärme von Grundkörper (1) und Kaschierstoff (2), mit dem Grundkörper (1) verklebt wird.

6. Kaschierverfahren gemäß Anspruch 5, **dadurch gekennzeichnet, dass** der Umbug (2.1) durch Restwärme vom Grundkörper (1) und Kaschierstoff (2) verklebt wird.

7. Kaschierverfahren gemäß einem der Ansprüche 4 bis 6, **dadurch gekennzeichnet, dass** die Vorwärmung durch Infrarot-Heizfelder (4) vorgenommen wird, wobei insbesondere eine vorbestimmte Temperatur durch eine Temperaturmesseinrichtung und eine Temperatursteuerung eingestellt wird.

8. Kaschierverfahren gemäß einem der Ansprüche 1 bis 7, **dadurch gekennzeichnet, dass** die Oberflächenenergie des Grundkörpers (1), welcher insbesondere aus EPP hergestellt ist, durch eine vorgeschaltete Oberflächenbehandlung, insbesondere im Durchlaufverfahren, erhöht wird.

9. Kaschierverfahren gemäß einem der Ansprüche 1 bis 8, **dadurch gekennzeichnet, dass** der Kaschierstoff (2) vor dem Auflegen aus einer Rollware (5), insbesondere mittels einer Querschneideeinheit (6), zugeschnitten wird.

10. Kaschierverfahren gemäß Anspruch 9, **dadurch gekennzeichnet, dass** die Kaschierstoffzuschnitte (2.2) von einem Spannrahmensystem (7) aufgenommen werden, anschließend insbesondere mittels Infrarot-Heizfeldern beidseitig im Spannrahmen (7.1) aufgeheizt werden und anschließend durch das Spannrahmensystem (7) auf den insbesondere vorgeheizten Grundkörper (1) aufgelegt werden.

11. Kaschierverfahren gemäß einem der Ansprüche 1 bis 10, **dadurch gekennzeichnet, dass** das Umbugen durch Umbugschieber (8) erfolgt, welche den Kaschierstoff (2) durch Heranfahren von außerhalb des Umfangs (1.1) des Grundkörpers (1) derart in Richtung des Grundkörpers (1), dass sie den nach dem Schneiden überstehenden Teil (2.1) des Kaschierstoffes (2) erfassen und flächig gegen den Grundkörper (1) drücken, so dass der Kaschierstoff (2) um 180 Grad umgebugt wird.

12. Kaschierverfahren gemäß einem der Ansprüche 1 bis 11, **dadurch gekennzeichnet, dass** mittels eines Stanzmessers (9) der Kaschierstoff (2) im Bereich von Durchbrüchen (1.2) innerhalb des Grundkörpers (1) beschnitten wird.

13. Kaschierverfahren gemäß einem der Ansprüche 1 bis 12, **dadurch gekennzeichnet, dass** mindestens zwei Grundkörper (1) auf einem Drehtisch (10) angeordnet werden, wobei mindestens ein Grundkörper in einer Vorheizposition im Bereich einer Heizeinrichtung (11, 4) angeordnet wird, wo er vorgeheizt wird, und gleichzeitig mindestens ein Grundkörper im Bereich einer Kaschiereinrichtung (12) angeordnet wird, wo er mit dem Kaschierstoff (2) kaschiert wird.

14. Kaschiervorrichtung, insbesondere zur Kaschierung von Fahrzeugsonnenblenden-Halbteilen, umfassend:
- eine Grundkörperhalteeinrichtung (13) zum Halten des zu kaschierenden Grundkörpers (1);
- eine Kaschierstoffauflageeinrichtung (14) zum Auflegen des Kaschierstoffes (2) auf den Grundkörper (1);
- eine Umbugeinrichtung (16) zum Umbugen des über den Außenumfang (1.1) des Grundkörpers (1) überstehenden Teiles (2.1) des Kaschierstoffes (2) um den Außenumfang (1.1) des Grundkörpers (1), wobei Mittel zum Verkleben des Kaschierstoffes (2) und des Umbugs (2.1) am Grundkörper (1) vorgesehen sind;
- die Grundkörperhalteeinrichtung (13) in Form eines Werkzeugunterteils (17.1) ausgebildet ist, und ein Werkzeugoberteil (17.2) zum Verpressen des aufgelegten Kaschierstoffes (2) und des Grundkörpers (1) vorgesehen ist,
- ein Teil des Werkzeugunterteils (17.1) und des Werkzeugoberteils (17.2) radial über das andere Teil (17.1, 17.2) übersteht und einen Formenhohlraum (17.3) zum vollständigen Aufnehmen des Grundkörpers (1) mit seinem gesamten Querschnitt aufweist, wobei das entsprechende Werkzeugteil (17.1, 17.2) außerhalb des Formenhohlraums (17.3) einen Vorsprung (17.4) in Umfangsrichtung des Formenhohlraums (17.3) aufweist, welcher im eingreifenden Presszustand das gegenüberliegende Werkzeugteil (17.1, 17.2) in Umfangsrichtung umschließt,
**dadurch gekennzeichnet, dass**
die Kaschiervorrichtung eine Kaschierstoffschneideinrichtung (15) zum Schneiden des Kaschierstoffes (2) entlang des Außenumfangs (1.1) des Grundkörpers (1) in einem vorgegebenen Abstand (d₁) außerhalb des Grundkörpers (1) umfasst, wobei die Kaschierstoffschneideinrichtung (15) ein über den gesamten Schneidbereich verlaufendes Schnittmesser aufweist und das Schnittmesser ein elektrisch widerstandsbeheiztes Heißschnittmesser ist.

15. Kaschiervorrichtung gemäß Anspruch 14, **dadurch gekennzeichnet, dass** das Heißschnittmesser (3) auf eine Temperatur von mehr als 500° C aufgeheizt wird.

16. Kaschiervorrichtung gemäß einem der Ansprüche 14 bis 15, **dadurch gekennzeichnet, dass** die Umbugeinrichtung (16) einen Umbugschieber (8) umfasst, welcher von außen in Richtung eines durch die Grundkörperhalteeinrichtung (13) gehaltenen Grundkörpers (1) verfahrbar ist, um den vom Grundkörper (1) herunterhängenden überstehenden Teil (2.1) des Kaschierstoffes (2) zu erfassen und gegen den Grundkörper (1) zu pressen.

17. Kaschiervorrichtung gemäß einem der Ansprüche 14 bis 16, **dadurch gekennzeichnet, dass** die Grundkörperhalteeinrichtung (13) in Form eines Drehtisches (10) ausgebildet ist, welcher eine Vielzahl von Grundkörpern (1) aufnehmen kann, wobei stets ein Teil des Drehtisches (10.1) im Bereich einer Heizeinrichtung (11), insbesondere unterhalb eines Infrarotfeldes (4) angeordnet ist, und ein anderer Teil (10.2) des Drehtisches im Bereich einer Kaschiereinrichtung (12) zum Auflegen und Umbugen sowie Verkleben eines Kaschierstoffes (2) auf dem Grundkörper (1) angeordnet ist.

18. Kaschiervorrichtung gemäß einem der Ansprüche 14 bis 17, **dadurch gekennzeichnet, dass** die Kaschiervorrichtung derart eingerichtet ist, dass ein Kaschierverfahren gemäß einem der Ansprüche 1 bis 13 ausgeführt wird.

## Claims

1. A covering method, particularly for covering semifinished vehicle sunshades, comprising the following steps:
- a covering material (2) is placed in a planar manner on a basic element (1) that is to be covered and is pressed with the basic element by a tool lower part (17.1) and a tool upper part (17.2);
- the part (2.1) of the covering material (2), which protrudes from the outer circumference (1.1) of the basic element (1), is bent across the outer circumference (1.1) of the basic element (1) and is glued;
- one of the tool parts (17.1, 17.2) has a projection (17.4) on its outer circumference, which protrudes over the cross-section of the pressed basic element (1) in the perpendicular direction so that during pressing, the outer circumference of the basic element is not pressed radially outward,
**characterised in that**
after laying, the covering material is cut using a cutting knife (3) which extends along the entire circumference (1.1) of the basic element (1) and is disposed outside said basic element at a given distance (D₁) from the outer circumference of the basic element and the cutting knife is an electrically resistance-heated hot cutting knife and all said steps are carried out by a single covering device.

2. The covering method according to claim 1, **characterised in that** the covering material (2) is pressed with the basic element (1) after placing on the basic element (1).

3. The covering method according to any one of claims 1 or 2, **characterised in that** the hot cutting knife is heated to a temperature of more than 500°C.

4. The covering method according to any one of claims 1 to 3, **characterised in that** the basic element (1) and the covering material (2) are preheated in particular simultaneously before bringing together.

5. The covering method according to any one of claims 2 to 4, **characterised in that** the covering material (2) is coated with an adhesive, in particular a polyurethane hot adhesive, and is glued to the basic element (1) by pressing with the basic element (1) at the same time, in particular by activation of the adhesive by the heat of basic element (1) and covering material (2).

6. The covering method according to claim 5, **characterised in that** the fold (2.1) is glued by residual heat from the basic element (1) and covering material (2).

7. The covering method according to any one of claims 4 to 6, **characterised in that** the preheating is carried out by infrared heating fields (4), wherein in particular a predetermined temperature is set by a temperature measuring device and a temperature control.

8. The covering method according to any one of claims 1 to 7, **characterised in that** the surface energy of the basic element (1), which in particular is made of EPP, is increased by an upstream surface treatment, in particular in the continuous process.

9. The covering method according to any one of claims 1 to 8, **characterised in that** the covering material (2) is cut from roll goods (5) before laying, in particular by means of a cross cutting unit (6).

10. The covering method according to claim 9, **characterised in that** the covering material blanks (2.2) are received by a clamping frame system (7), then heated in particular by means of infrared heating fields on both sides in the clamping frame (7.1) and then placed by the clamping frame system (7) on the in particular pre-heated basic element (1).

11. The covering method according to any one of claims 1 to 10, **characterised in that** the folding is accomplished by folding sliders (8) which grasp the covering material (2) by approaching from outside the circumference (1.1) of the basic element (1) in such a manner in the direction of the basic element (1) that they grasp the projecting part (2.1) of the covering material (2) after cutting and press this in a planar manner against the basic element (1) so that the covering material (2) is folded by 180 degrees.

12. The covering method according to any one of claims 1 to 11, **characterised in that** the covering material (2) is trimmed in the region of gaps (1.2) inside the basic element (1) by means of a punching knife (9).

13. The covering method according to any one of claims 1 to 12, **characterised in that** at least two basic elements (1) are arranged on a rotary table (10), wherein at least one basic element is arranged in a preheating position in the region of a heating device (11, 4) where it is preheated and at the same time, at least one basic element is arranged in the region of the covering device (12), where it is covered with the covering material (2).

14. A covering device, in particular for covering semifinished vehicle sunshades, comprising:
- a basic element holding device (13) for holding the basic element (1) to be covered;
- a covering material laying device (14) for laying the covering material (2) on the basic element (1);
- a folding device (16) for folding the part (2.1) of the covering material (2) which projects over the outer circumference (1.1) of the basic element (1) around the outer circumference (1.1) of the basic element (1), wherein means for gluing the covering material (2) and the fold (2.1) on the basic element (1) are provided;
- the basic element holding device (13) is configured in the form of a tool lower part (17.1), and a tool upper part (17.2) is provided for pressing the laid covering material (2) and the basic element (1),
- a part of the tool lower part (17.1) and the tool upper part (17.2) projects radially over the other part (17.1, 17.2) and has a mould cavity (17.3) for completely receiving the basic element (1) with its entire cross-section, wherein the corresponding tool part (17.1, 17.2) outside the mould cavity (17.3) has a projection (17.4) in the circumferential direction of the mould cavity (17.3) which in the engaging pressing state encloses the opposite tool part (17.1, 17.2) in the circumferential direction
**characterised in that**
the covering device comprises a covering material cutting device (15) for cutting the covering material (2) along the outer circumference (1.1) of the basic element (1) at a given distance (d₁) outside the basic element (1), wherein the covering material cutting device (15) has a cutting knife running over the entire cutting region and the cutting knife is an electrically resistance-heated hot cutting knife.

15. The covering device according to claim 14, **characterised in that** the hot cutting knife (3) is heated to a temperature of more than 500°C.

16. The covering device according to any one of claims 14 to 15, **characterised in that** the folding device (16) comprises a fold slider (8) which can be moved from outside in the direction of a basic element (1) held by the basic element holding device (13) in order to grasp the projecting part (2.1) of the covering material (2) hanging down from the basic element (1) and press it against the basic element (1).

17. The covering device according to any one of claims 14 to 15, **characterised in that** the basic element holding device (13) is configured in the form of a rotary table (10) which can receive a plurality of basic elements (1), wherein a part of the rotary table (10.1) is always disposed in the region of a heating device (11), in particular below an infrared field (4), and another part (10.2) of the rotary table is disposed in the region of a covering device (12) for laying and folding, as well as gluing a covering material (2) on the basic element (1).

18. The covering device according to any one of claims 14 to 17, **characterised in that** the covering device is set up in such a manner that a covering method according to any one of claims 1 to 13 is executed.

## Revendications

1. Procédé de recouvrement, en particulier pour le recouvrement de pare-soleil semi-finis de véhicule, comprenant les étapes suivantes :
- un matériau de recouvrement (2) est appliqué à plat sur un corps de base (1) à recouvrir et pressé par une partie inférieure d'outil (17.1) et une partie supérieure d'outil (17.2) sur le corps de base ;
- la partie (2.1) du matériau de recouvrement (2) qui dépasse de la circonférence extérieure (1.1) du corps de base (1) est rabattue et collée par-dessus la circonférence extérieure (1.1) du corps de base (1) ;
- l'une des parties d'outil (17.1, 17.2) présente sur sa circonférence extérieure une saillie (17.4) qui dépasse au-delà de la section du corps de base (1) pressé dans le sens vertical, de sorte que la circonférence extérieure du corps de base n'est pas pressée vers l'extérieur dans le sens radial lors du pressage ;
**caractérisé en ce que** le matériau de recouvrement est découpé après l'application par un couteau de coupe (3) passant le long de toute la circonférence (1.1) du corps de base (1) et disposé à une distance prédéterminée (D₁) de la circonférence extérieure du corps de base et le couteau de coupe est un couteau chauffant à chauffage électrique par résistance et toutes les étapes mentionnées exécutées réalisées par un seul dispositif de recouvrement.

2. Procédé de recouvrement selon la revendication 1, **caractérisé en ce que** le matériau de recouvrement (2) est pressé sur le corps de base (1) après avoir été appliqué sur le corps de base (1).

3. Procédé de recouvrement selon l'une des revendications 1 ou 2, **caractérisé en ce que** le couteau de coupe chauffant est chauffé à une température de plus de 500°C.

4. Procédé de recouvrement selon l'une des revendications 1 à 3, **caractérisé en ce que** le corps de base (1) et le matériau de recouvrement (2) sont préchauffés en particulier simultanément avant d'être réunis.

5. Procédé de recouvrement selon l'une des revendications 2 à 4, **caractérisé en ce que** le matériau de recouvrement (2) est enduit d'un adhésif, en particulier d'un adhésif polyuréthane, et collé au corps de base (1) par le pressage en même temps qu'il est pressé sur le corps de base (1), en particulier par l'activation de la colle par la chaleur du corps de base (1) et du matériau de recouvrement (2).

6. Procédé de recouvrement selon la revendication 5, **caractérisé en ce que** le rabat (2.1) est collé par la chaleur résiduelle du corps de base (1) et du matériau de recouvrement (2).

7. Procédé de recouvrement selon l'une des revendications 4 à 6, **caractérisé en ce que** le préchauffage est réalisé par des panneaux chauffants à infrarouges (4), une température prédéterminée étant en particulier établie par un dispositif de mesure de la température et une commande de la température.

8. Procédé de recouvrement selon l'une des revendications 1 à 7, **caractérisé en ce que** l'énergie de surface du corps de base (1), qui est fabriqué en particulier en polypropylène expansé, est accrue par un traitement de surface préalable, en particulier en continu.

9. Procédé de recouvrement selon l'une des revendications 1 à 8, **caractérisé en ce que** le matériau de recouvrement (2) est découpé avant l'application à partir d'un rouleau de matériau (5), en particulier au moyen d'une unité de découpe transversale (6).

10. Procédé de recouvrement selon la revendication 9, **caractérisé en ce que** les découpes du matériau de recouvrement (2.2) sont recueillies par un système de cadre de serrage (7), puis chauffées des deux côtés dans le cadre de serrage (7.1), en particulier au moyen de panneaux à infrarouges, et posées ensuite par le système de cadre de serrage (7) sur le corps de base (1), qui est en particulier chauffé.

11. Procédé de recouvrement selon l'une des revendications 1 à 10, **caractérisé en ce que** le repliement est réalisé à l'aide de coulisses de repliement (8) qui s'approchent depuis l'extérieur de la circonférence (1.1) du corps de base (1) en direction du corps de base (1) de façon à saisir la partie (2.1) du matériau de recouvrement (2) qui dépasse après la découpe et à la presser à plat contre le corps de base (1), de telle façon que le matériau de recouvrement (2) est rabattu à 180°.

12. Procédé de recouvrement selon l'une des revendications 1 à 11, **caractérisé en ce que** le matériau de recouvrement (2) est découpé au moyen d'un emporte-pièce (9) au niveau d'ouvertures (1.2) dans le corps de base (1).

13. Procédé de recouvrement selon l'une des revendications 1 à 12, **caractérisé en ce qu'**au moins deux corps de base (1) sont disposés sur une table tournante (10), au moins un corps de base étant disposé dans une position de préchauffage au niveau d'un dispositif de chauffage (11, 4) dans laquelle il est préchauffé, et au moins un corps de base étant disposé en même temps au niveau d'un dispositif de recouvrement (12) où il est recouvert avec le matériau de recouvrement (2).

14. Dispositif de recouvrement, en particulier pour le recouvrement de pare-soleil semi-finis de véhicules, comprenant :
- un dispositif de maintien du corps de base (13) pour le maintien du corps de base (1) à recouvrir ;
- un dispositif de pose du matériau de recouvrement (14) pour l'application du matériau de recouvrement (2) sur le corps de base (1) ;
- un dispositif de repliement (16) pour rabattre la partie (2.1) du matériau de recouvrement (2) qui dépasse de la circonférence extérieure (1.1) du corps de base (1) autour de la circonférence extérieure (1.1) du corps de base (1), des moyens étant prévus pour le collage du matériau de recouvrement (2) et du rabat (2.1) sur le corps de base (1) ;
- le dispositif de maintien du corps de base (13) est réalisé sous la forme d'une partie inférieure d'outil (17.1) et une partie supérieure d'outil (17.2) est prévue pour presser le matériau de recouvrement (2) appliqué et le corps de base (1),
- une partie de la partie inférieure d'outil (17.1) et de la partie supérieure d'outil (17.2) dépasse dans le sens radial par-dessus l'autre partie (17.1, 17.2) et présente une cavité de moule (17.3) destinée à recevoir complètement le corps de base (1) sur toute sa section, la partie d'outil (17.1, 17.2) correspondante comportant en dehors de la cavité de moule (17.3) une saillie (17.4) dans le sens de la circonférence de la cavité de moule (17.3) qui renferme, dans l'état de pressage en prise, la partie d'outil (17.1, 17.2) opposée,
**caractérisé en ce que** le dispositif de recouvrement comprend un dispositif de coupe du matériau de recouvrement (15) destiné à couper le matériau de recouvrement (2) le long de la circonférence extérieure (1.1) du corps de base (1) à une distance prédéterminée (d₁) en dehors du corps de base (1), le dispositif de coupe du matériau de recouvrement (15) présentant un couteau de coupe passant sur toute la zone de coupe et le couteau de coupe étant un couteau chauffant à chauffage électrique par résistance.

15. Dispositif de recouvrement selon la revendication 14, **caractérisé en ce que** le couteau chauffant (3) est chauffé à une température de plus de 500°C.

16. Dispositif de recouvrement selon l'une des revendications 14 à 15, **caractérisé en ce que** le dispositif de repliement (16) comprend une coulisse de repliement (8) qui peut être déplacée de l'extérieur en direction d'un corps de base (1) retenu par le dispositif de maintien du corps de base (13) pour saisir la partie (2.1) du matériau de recouvrement (2) qui dépasse et pend du corps de base (1) et la presser contre le corps de base (1).

17. Dispositif de recouvrement selon l'une des revendications 14 à 16, **caractérisé en ce que** le dispositif de maintien du corps de base (13) est réalisé sous la forme d'une table tournante (10) qui peut recevoir une pluralité de corps de base (1), une partie de la table tournante (10.1) se trouvant toujours au niveau d'un dispositif de chauffage (11), en particulier en dessous d'un panneau à infrarouges (4), et une autre partie (10.2) de la table tournante étant disposée au niveau d'un dispositif de recouvrement (12) pour l'application et le repliement d'un matériau de recouvrement (2) sur le corps de base (1).

18. Dispositif de recouvrement selon l'une des revendications 14 à 17, **caractérisé en ce qu'**il est conçu de façon à exécuter un procédé de recouvrement selon l'une des revendications 1 à 13.
